# EUROPEAN PATENT APPLICATION

(11) **EP 0 529 929 A1**
(43) Date of publication of application: **03.03.1993**
(21) Application number: 92307581.6
(22) Date of filing: 19.08.1992
(51) Int. Cl.: B41M 5/34, B41J 2/525, H04N 1/46

(54) **Thermal transfer of images**

(30) Priority: 30.08.1991 US 752770
(71) Applicant: MINNESOTA MINING AND MANUFACTURING COMPANY, St. Paul, Minnesota 55133-3427 (US)
(72) Inventor: Fisch, Richard S., c/o Minnesota Mining and, St. Paul, Minnesota 55133-3427 (US); Jongewaard, Susan K., c/o Minnesota Mining and, St. Paul, Minnesota 55133-3427 (US); Larshus, David A., c/o Minnesota Mining and, St. Paul, Minnesota 55133-3427 (US)
(74) Representative: Molyneaux, Martyn William

(57) **Abstract**

Thermal transfer imaging processes are improved by a real time sensing of the process and responsive changes to the sensing of the process.

## Description

### Background of the Invention

The present invention relates to the thermal transfer of non-traditional colors. In particular, the invention relates to novel media, processes, and apparatus for such non-conventional thermal transfer systems.

### Background of the Art

Many imaging systems have been developed to be used with computer generated and other electronically generated images. This development has been necessitated by the generation or transmission of electronic images and the need for hard copy prints of such images, both in black and white and color. Originally, silver halide imaging systems were used for such image generation, and such systems still can provide high quality images. In certain areas of the market, lower image quality can be tolerated and lower costs are essential. Ink-jet printing and thermal dye transfer systems have found increasing acceptance in these markets.

Ink jet printing has suffered in its acceptance because of a number of technical problems, not the least of which is a tendency of print heads to clog. This requires an intolerable level of maintenance and a complete shut down of the system during servicing. Furthermore, image colors tend to be unstable and color gradation has been virtually non-existent. Color gradation has been quite limited also in commercial thermal colorant transfer systems, although significant improvements in these problems have been made.

The technology of thermal colorant systems can be divided into two fields, mass transfer and dye sublimation transfer. The term mass transfer is used to refer to systems in which both the colorant and its binder are transferred from a donor sheet to a receptor sheet (or intermediate carrier sheet). Because of the relatively large size of the transferred material (a particle comprising both colorant and binder), color gradation or continuous tones in the image is difficult to achieve. Furthermore, if the colorant is a dye it exhibits more limited aging stability than do pigments.

The term sublimation transfer is used to refer to systems in which essentially only the colorant is transferred by sublimation or vaporization to a receptor sheet. This type of process leaves behind in the donor sheet any binder or untransferred dye which might have been used in the donor sheet.

In the mass transfer technology area, much improvement has been made in the design and thermal control of the print head. A good example of this approach is given by S. Merino of Matsushita Electric Company, Ltd. in a paper presented at the August ′86 SPSE Conference on Non-Impact Printing Technologies in San Francisco. He described "thermo-convergent ink transfer printing (TCIP) as a system in which the shape of the heating elements of the print head are optimized and the energy pulses are controlled so that half-tone or approximately continuous tone reproduction is much improved when wax-colorant donor sheets are used. Understandably the donor sheet has been the target of improvement work in recent years. Japanese Kokai, J59-224394 discloses the use of two incompatible binders in which the dye is dissolved. This results in the mass transfer of relatively small particles of colorant. Combining this donor sheet with good print head control is reported to give some low level of color gradation.

European Patent, EPO 163297 teaches the use of high melting-point particles with diameters larger than the thickness of the ink layer which particles serve as heat conductors to aid in the transfer of the color mass.

A paper entitled "Thermal Ink Transfer Sheets for Gradated Print" by Tagushi et al., of Matsushita given at the SPSE Conference in San Francisco on Aug. 2426, 1986 briefly described a system claimed to yield improved mass transfer quality. This system makes use of one resin and colorant in the donor sheet and a different resin in the receptor sheet. The modulated thermal signal in the print-head causes changes in the melt, compatibility, adhesion and transfer between the two resins thus producing a continually graduated print.

Japanese Patent JP 62-292483 discloses a thermal transfer sheet having a thermal transfer layer which comprises a mixed wax of at least two components and a colorant. The layer comprises at least 60% by weight of the combination of waxes having a melting point in the range of 45°-70°C and another thermal melting material having a softening point within the range of 100°-200°C. Neither of these materials are shown to include chlorinated waxes. However, an optional third ingredient, other waxes that may be mixed with A and B, includes amongst the more than thirty alternatives "chlorinated paraffin wax" (page 8 of translation). The system therefore requires that at least 60% of all thermally softenable materials be other than the chlorinated wax alternative.

Japanese Patent, JP 58-162678 discusses an ink containing chlorinated paraffin wax, and is used for a thermal transfer ink which is coated on paper. The use of the chlorinated paraffin wax is noted for improved shelf-life characteristics for the thermal transfer coating. There is no mention of improved transparency or clarity of colors.

U.S. Pat. No. 4,503,095 and U.S. Pat. No. 4,572,684 discuss a thermal transfer ribbon composition that contains a coloring agent and a hot-melt vehicle for a thermal transfer composition. These patents disclose that the coloring agent and the hot-melt vehicle used in each ink layer preferably should have refractive indexes which are near to each other. These patents do not mention the use of chlorinated paraffin waxes.

U.S. Pat. No. 3,736,133 discusses a method of forming ink absorbent transparencies comprising applying a lacquer to a polymeric film transparency, said lacquer comprising a substantially transparent resinous binder pigmented with an ink absorptive pigment exhibiting substantially the same refractive index as that of the binder, and drying said lacquer on said transparency. The pigment contains an ink absorptive pigment with high effective surface area which has a refractive index closely matching that of the binder in which it is to be used. Pigments specified match a certain range of near refractive index qualified resin, but they must also have the property of having an exceptionally high absorptive power of inks.

U.S. Pat. No. 3,601,484, Dybvig, et al., discloses that configurations for carrier or donor sheet size can be in exact line up with the receptor sheet size. Also, Great Britain patents 1,278,325, 1,281,859, and 1,281,860 clearly detail elongate web material coated in sequential color arrangements, and each color zone being of equal size to the color separation image to be reproduced. This configuration is discussed in more exact size arrangement in U.S. Pat. No. 4,503,095.

Traditional mass transfer and dye sublimation systems use only three or four colors in the preparation of the image. Equipment used in printing these thermal transfer images are designed for three or four passes or the receptor surface under the thermal head. The paper or receptor surface is automatically ejected from the machine after three or four passes. These machines offer neither flexibility in the selection of colors, nor the capability of more than four colors in the production of images.

### Summary of the Invention

Non traditional thermal transfer processes having non-traditional color appearing image capability or process improvement capability are described. The addition of an external computer, particularly a personal-type computer, to the thermal mass transfer or thermal dye transfer imaging apparatus provides flexibility in the addition of more than four colors, variation of color ordering, the maintenance of resolution amongst those colors, and desktop work station capability in the preparation of images.

### Detailed Description of the Invention

In producing an image by thermal transfer (either thermal mass transfer or thermal dye sublimation transfer), conventional apparatus provides a definite sequence of colors laid down in a fixed order dependent upon the order of thermal transfer donor rolls or sheets. These sheets may be provided as a ribbon with a definite order of parallel stripes of different transferable colors, a ribbon with a definite order of a sequence of alternating segments of different transferable colors, or cassettes set in a predetermined order with different transferable colors in each cassette. As the image information is fed into the machine, the machine prints the images in the fixed order of the colors in the donor rolls or sheets. This fixed order is not necessarily the best order or the desired order for each and every printing effort. For example, while the printing trade in the U.S. uses a color sequence of yellow, magenta, cyan and black, European printing requirements are cyan, magenta, yellow and black. With the apparatus of the present invention, a single advertising agency can proof an image in both the U.S. and European standards. The previous equipment and the processes which they were able to perform were inflexible and could not meet the needs of diverse printing areas, especially areas like color prepress proofing and desk-top proofing where variation in image color content and ordering is an important part of the work requirements.

In producing an image by thermal transfer according to the present invention, one provides an apparatus with at least three and usually at least four different color thermal transfer donor surfaces provided in a fixed order. Then one selects an order of use for more than one color (two color combinations are useful) with the selected order of use being different from the fixed order, signalling (e.g., electronically) a thermal printhead to transfer a first color and at least a second color in the selected order of use and transferring an image comprising said first and second color onto a receptor by heating at least two thermal transfer media with said thermal printhead in said selected order of use to transfer image density from said media to said receptor. The receptor is restrained within said process (e.g. by gripping, adhesion, drawdown, guides, etc.) against a support surface or carrier surface to promote registration.

This process can provide significant flexibility. For example, after the image comprising at least two colors has been formed by individual transfer of colors to a receptor, the receptor (e.g. paper) can be kept in the apparatus for further enhanced imaging, even if the ordinary total output of colors (e.g., three or four colors) has been used. At least one additional thermal transfer media having an additional transferable color not contained in the original colors of said fixed order (e.g., yellow, magenta, cyan, and possibly black) is provided into the apparatus. This additional thermal transfer sheet is moved into imaging proximity to the imaged receptor and a thermal printhead is signalled to transfer an image of said additional color from said at least one additional thermal transfer media to the receptor. This process may be repeated so that, four, five, six, seven, eight or more colors can be transferred while the receptor is kept in register. Conventional equipment automatically ejects the receptor after the original colors have been provided.

Another aspect of the process may be achieved in producing an image by thermal transfer by: a) providing a thermal printhead, thermal transfer donor media, and thermal receptor, b) moving said receptor or said printhead, c) sensing the movement of said receptor and/or media, and d) altering the signals (including heat profile) to said thermal head in response to any said color change and sensing.

The sensing may be used to determine whether said receptor is moving or is to move relatively forward or relatively backwards in the apparatus. Where said movement is relatively backwards the signals to said thermal head may be altered by at least providing the image signals in a backward ordering. In this manner, the image produced during what was conventionally the backward or return movement of the receptor would be in relative register with an image provided during the forward movement of the receptor with signalling to a printhead by a forward ordering of image signals. The altering may be an adjustment for variations in the speed of said receptor and/or media, such as those caused by inertia, momentum, and/or drag or friction. The alteration of the signal may be a rotation and/or distortion of the image data. An example, the data may effectively rotate the image more than 1 degree or less than 359 degrees for visual effects. Shadow or reflection images may be made, with or without elongate distortion of the images. The data which is altered may be printed once in unaltered form and altered images associated with it, or single or multiple altered images may be printed.

Registration needs to be assured in all cases. Backwards movement may be needed for time savings in a multicolor image process since the computer need not wait for the receptor paper to return to its original position before printing another color image. The flipping action may be needed for transfer imaging. Images made to be transferred wind up as mirror images of the scene being printed. This is unacceptable for proofing. The mirror image problems force the use of a double transfer system (A and B sheets). Flipping the image file and making the initial image (on the receptor) a mirror image to start with, allows the transfer image to be right reading.

There are at least two novel thermal transfer media useful in the practice of the present invention. One medium comprises at least a thermal transfer backing layer having a vapor deposited metallic appearance thereon. The second medium comprises at least a thermal transfer backing layer having a fluorescent pigment layer and over that, a white pigment layer. The second medium may also be constructed by having alternating patches of fluorescent color and white pigment.

The thermal transfer backing layer is a material well known in the art. The supports used in the donor sheet of this invention include, but are not limited to non-porous paper such as capacitor tissue paper, typewriter manifold, or tracing paper, synthetic paper, cellophane, and polymeric resin films such as polyester film, polyimide film, polyethylene film, polycarbonate film, polystyrene film, polyvinylacetate film, polyvinylalcohol film, polyvinylethylene, and polypropylene film. These support materials can be used as non-treated substrates, or heat treated substrates to prevent sticking by the thermal head. The preferred examples of the substrates have a thickness of about 3 microns.

The term "non-porous" is indicative of the fact that when heated, the wax material will not substantially be absorbed or will not retract into the substrate. Some imageable materials work by forming holes or areas where transferable material is not present because of its absorption into the substrate. Here the substrate is so thin it is effectively non-porous in that the color coating will not penetrate into the substrate in such a volume as to prevent transfer of most of the coating where heated. These thermal transfer support layers are generally below 12 micrometers in thickness. Preferably they are below 9 micrometers in thickness, and most preferably between 1 and 6 micrometers.

In the use of metallic appearance thermal transfer layers according to the present invention, a layer of the metallic appearing material is vapor deposited onto the thermal backing layer. An adjuvant layer to assist bonding or release properties of the metallic layer may be used on the backing. By metallic appearance, it is meant that the coated layer and the layer transferred give a true metallic appearance. This can be done by the use of pure metals or metallic oxides. Essentially any metal or metal oxide that gives a desired appearance can be used. Gold, silver, copper, alloys, alumina, chromia, zirconia, and any other available material may be conveniently used to provide the metallic appearance. By having metallic particulates of sufficiently uniform size in a binder, dispersed metallic pigments can be used. It is a preferred embodiment to provide the metallic appearance transfer layer in a vapor coated format.

In the fluorescent media, it is possible to either vapor coat the fluorescent pigment or dye (if it is not subject to undesirable degrees of degradation in that type of coating procedure) or to solvent coat the pigment in a binder. The layer should be thick enough to provide a useful image density upon transfer and not be so thick as to interfere with the thermal transfer process. This will usually mean a layer between 0.1 and 8 micrometers, preferably between 0.5 and 5 micrometers. Fluorescent pigments are well known in the art and commercially available. These pigments are dispersed in a binder with solvent and coated upon the thermal transfer backing layer. The binder can be any commercially useful binder as generally used in thermal mass transfer media. Typical examples of binders useful in the present invention are other waxlike materials such as paraffin waxes, silicones, natural waxes such as beeswax, Candelilla wax, japan wax, carnauba wax, and oxocerite. Synthetic waxes are also useable, especially acid waxes, ester waxes, partially saponified ester waxes, and polyethylene waxes, polyvinyl alcohol, methylcellulose, gelatin, hydroxymethyl-cellulose, gum arabic, starch and derivatives thereof, casein, polyvinylpyrrolidone, styrene-butadiene copolymer, coumarin-indene resin, polyvinylacetate, vinylacetate copolymers, methyl methacrylate resin, acrylic resin, styrene-acrylonitrile resin, ethylene-vinyl acetate compolymer, and chlorinated rubber or polyolefin. These may be used alone or in combinations of two or more. Chlorinated waxes and chlorinated polyvinyl chloride are particularly desirable as in U.S. 4,839,224.

The white pigment layer used in combination with the fluorescent media either on the fluorescent layer or as a separate patch usually comprises white pigment in a thermal transfer binder. The white pigment may be titania, calcium carbonate, or other conventional white pigments. The concentration and thickness of this layer would be similar to those of the fluorescent layer.

In the use of these media, additional layers may be present beyond those already described. A topcoat adhesive layer may be present to assist bonding to a receptor sheet. Such adhesive layers would ordinarily be thermal adhesive materials such as, thermally sensitive acrylates, polyolefins, polyvinyl resins, polystyrene, and the like. The adhesive layer would ordinarily be between 0.5 and 2 micrometers, preferably less than 1 micrometer. Other additional layers could include co-color layers to add desired hues or special tones to the metallic or fluorescent materials. These layers would have to be kept within the size framework necessary to allow for efficient thermal transfer, such as less than 4 micrometers. In some types of imaging, the use of a photoresist layer to enhance the image or even create the image could be used. Either positive acting or negative acting photoresist layers, as they are well known in the art, could be used.

The non-traditional color imaging materials of the present invention are provided in the format that conventional color thermal transfer materials are provided in. The media are provided as sheets, ribbons or tapes with the non-traditional color providing layers on the tape. The ribbon may contain as many colors thereon as one could select. A sheet or ribbon may contain a single color, or a multitude of colors in either parallel rows or sequential patches. Preferably colors are provided in parallel rows or sequential patches along the length of the ribbon.

It is also possible to combine both the thermal mass transfer or thermal dye transfer media of the present invention in the same apparatus and process. The thermal printer can be designed with both thermal mass transfer and thermal dye transfer capability. This allows for the same final image to have both areas formed by dye transfer and other areas formed by thermal mass transfer. Certain commercial equipment may allow for 1 or the other formats of imaging, but provides no capability for combining the formats, particularly with registration between the different contributions.

The combination of a computer to the thermal imaging apparatus is more than the mere provision of an unalterable source of image information to the printer. The computer can actually manipulate the printer so that it will provide the blend of different image components in register from the different media. The computer provides keyboard access control of both electronic memory and directional signals. The control is directed towards many various functions, including the number selection of thermal transfer media, the order selection of thermal transfer media, and control of thermal head heat gradients for use with different image formats (e.g., dye sublimation versus mass transfer). The computer can also be used in a very important image control and enhancement function. It is important to obtain a best possible image, particularly where image design or proofing is being practiced. One inherent drawback of thermal imaging is variant speeds in the receptor media and donor media. The receptor in particular tends to accelerate and undergo speed changes as it is moved during the imaging process. A computer program can be readily set up in the system to give a real time reading of the speed of the paper (receptor). This reading of the speed of the paper can then be used to immediately signal the thermal heads to " match" the speed of the print signal to the speed of the paper to give a uniform spread to the digital information imparted to the receptor. The thermal profile of the printing head may also change in each pass of the paper. The speed or timing of the image signal output may also be adjusted to the paper speed. The computer can also read the thermal profile of the head and adjust the signal accordingly to provide the appropriate level of transfer. Marks may be used on the side of the receptor or donor to be read by a sensor in the thermal printing apparatus, or electronic marking may be present. The computer control over the imaging process allows for the operator to instruct the thermal imaging equipment when the receptor is to be ejected or retained. In this way any combination of colors and numbers of colors can be kept in registration since the receptor does not get removed from the system.

The sensor may also read the size of the receptor. The image data may be compressed or expanded by an algorithm or other software to adjust to the size of the receptor. This function can automatically be performed by the apparatus of the present invention or can be done upon command. Appropriate sensors can read the color values of the final image and through a feedback system make such adjustments as are needed in the heat profile of the printhead to in-process improved print quality. The sensor may also determine if the receptor sheet is to be received by transmission or reflectance material and adjust the laid down quantity and density of colorant.

The apparatus of the present invention is preferably provided in desktop size. This means that the printer itself, exclusive of the computer, interface, and modular components (such as collators, etc) would take up less than 16 cubic feet (1.74 cubic meters). Preferably the size of the equipment can be held to less than 12 cubic meters (1.3 cubic meters). The thermal printer may have a single printing thermal head as is conventionally used in the art, or because of the capability of computer direction, a multiplicity of thermal heads may be present to sequentially or simultaneously transfer images of different colors. In one preferred construction, two or more, separate ribbons of multiple colors are independently imaged by different thermal heads.

The system of the present invention is particularly useful in designing non traditional images. These images can be found and used in greeting cards, advertisements, designing, artwork, security systems, proofing, and the like.

A major contributor to the overall look of a printed piece is the color of the paper on which inks are printed.

Software can be incorporated into this invention to allow the simulation of various paper stocks by printing the color of the paper into the background of the proof. The color of the image areas is then adjusted to match the effect of the paper color on the inks printed on that paper. A more accurate proof simulating a wider range of printing stocks results.

The use of imaging materials or equipment in different technical and commercial areas can put different requirements on them. For example, the commercial requirements for color printing and color proofing are different with respect to the registration of the various color images. Although perfect registration might be desirable, in reality, there are more finite goals set. For color printers, registration of about 0.40 mm is an accepted standard and 0.30 mm is a favorable result. In color proofing, however, registration of less than 0.15 mm is required, less than 0.12 mm is desired, less than 0.10 is preferred, and between 0.04 to 0.10 is most preferred. The distances are those between rows and dots of different colors at both or either extreme and of an image. In achieving proofing quality multicolor images with a thermal transfer system, a significant advance in the art has been made.

A non-limiting example of a system for effecting the process of the present invention has been designed as follows:
This particular system combines the need for computer feedback information on both registration of the image and also the color reproduction aspects of the image as it is being produced.
There is first an electro-optical sensing module which may contain:
1. A light source filtered to eliminate IR radiation optionally separate from the photosensor(s).
2. A photometric sensor operating in a linear mode
3. A linear amplifier for such a photosensor(s).
4. An optional infrared (IR) filter between the photosensor and the light source.
5. When a photosensor is used, at least three filters on a rotatable wheel, or otherwise positioned, to enable either single color or multiple color readings from that sensor. Such filtration being chosen from but not limited to transparent materials of at least red, green or blue composition or able to simulate the characteristics of the Standard Observer Responses as detailed in the CIE Standard on Colormetric Measurement, 1931. When multichannel photosensors or more than one photosensor is employed, color signal isolation such as vapor coated filtration on the radiation sensor itself can also be employed.

Then there is a digitally file image to be imposed onto a temporary or final support containing the following:

A machine readable imposed image on a carrier of the color image preferably but not necessarily on the transparent intermediate support

Such images may consist of, but not be restricted to, the following order:
1. Solid image line, consisting of from 1 to 8 colors, no more than 1.5 mm wide from now called Fiducial Bar or Mark.
2. A non-image or clear area of at least 3 mm in width.
3. At least four uniform areas of a single color with selected transmittance or reflectance needed for such processes to be controlled. The transmittance or reflectance levels of such images shall be chosen in such a manner that they are not a uniform progression of each other in a photometric mode, but such that the intensity differential between each of the areas will maximize the intensity difference between the areas. An optional additional single color Fiducial Mark preceding a series of color patches of the same color may be used.
4. At least three color areas consisting of the images as described above. The color order of such images being in a manner to maximize intensity differences between color images and a maximum intensity from the last series of color images.

The operational equipment used in the system may include:
1. A timing system (i.e., a clock, electronic timing program or other means of timing).
2. A Schmidt Trigger Assembly.
3. Microcircuitry to enable signal capture, manipulation, storage, information communication, and means within the control of the personal computer, circuitry and or programming to enable signal capture, etc. An optional additional single color Fiducial Mark preceding a series of color patches of the same color may be used.

The operational details of the system could be as follows for the activity of registration and color control or other desired activity.
1. A technique of continuously sampling photosensor output will be employed.
2. It is proposed that a 4 color fiducial bar be the first item printed onto the receptor.
3. All readings taken will require information on the intensity values of the clear base or intermediate sheet. Such values are used to calculate parameters such as dot gain as well as an indication of background. It is, therefore, proposed that this patch be the first patch printed. To help identify that area, an optional second fiducial mark is imposed on the web before the area to be analyzed. The color of that fiducial mark should be black, but expeditiously may be another color. The next best color for the fiducial mark would be the last color used in the string of color patches generated. It is evident that this clear area be read by all four photosensor filters using the rotating filter mode. The information on the clear areas shall be kept in a buffer as separate intensities until needed.
4. When only a single color as in a color patch is to be interrogated, operating the filter wheel in its rotating mode is counter productive. In the rotating filter mode, a YMCK signal from the instrument and the device only needs a single color signal. Were the filter wheel stationary, the opportunity presents itself by obtaining three times more useful data for the particular color patch or patch under study. Programming is needed to implement the ability to freeze or hold the filter wheel at will in a known position.
5. If the color patch images are placed in a specific order on the intermediate sheet, color differentiating fiducial marks are not needed to differentiate and find the individual dot areas in a single color image set. A correct sequence of images also differentiate the individual colors in a test sequence and can be used as a indicator of when to change the color filter wheel position.
6. The test image sequence for the clear area and the first color should be an optional fiducial mark, clear area, and nominally 75%, 25%, 50%, and solid area.
7. For registration control with one color Fiducial Mark, the light reflected or transmitted from the copy is sampled at a rapid rate. As the image area being analyzed progresses from the base or background copy to that of the actual mark, image change in signal produced by the beginning of the Fiducial image activates a Schmidt Trigger an the intensity vs. paper transport time differential is stored and analyzed progresses from the base or background copy to that of the actual mark, image change in signal produced by the beginning of the Fiducial image activates a Schmidt Trigger and the intensity vs. paper transport time differential is stored and analyzed in computer memory. Information on the profile, especially the transport time vs. Fiducial Mark signal peak information is stored awaiting information from the next mark. The difference in time between the peaks of the Fiducial marks per color is used to influence paper transport or image information time. When a multicolor Fiducial Mark is employed with a multichannel sensor, the action of Fiducial Mark analysis and compensation is facilitated, on a proper signal from the digital proof devise (i.e., the signal to start) the photosensor will sample, store, and dump this signal (the intensity of the web) at a rapid rate. A large rise in intensity as the fiducial mark passes the photosensor will activate the Schmidt Trigger and allow a program to bisect the fiducial mark to indicate the start of a sequence, and signal the computer to capture and average the clear area readings at a lower sample rate. The sudden rise in signal from the clear area to the 75% area will indicate a change, causing a filter wheel rotation and then allowing the readings to be taken for the color 75% dot area patch. A change in signal from the 75 to the 25% level will again be understood as a change of patch area and signal the capture of the 25% dot area data. Each succeeding patch is lower or higher than the previous one, and the signal differential is used to identify the patch to be read. The color position on the web of each of the four colors should be in an order or the color order should be understood by the computer such that the same logic can apply. That is, the first color might be a cyan image with an equivalent intensity level to about 0.70 optical transmission density. The next color intensity signal might be a yellow image with an equivalent transmission optical density of about 0.50 followed by a black intensity equivalent of 0.80 transmission optical density and then a magenta of equivalent 0.66 density.
   Normally density is used as the preferred measure. In the case of this invention percent reflectance or transmittance, a linear mode, will be used. This assures no data compression due to operation in the logarithm mode and increased output resolution. Operation in the linear mode will allow not only greater accuracy of computation but also increases the signal difference between patches and colors.
8. Measured timing loops between the different color patches can alternatively be used for registration checks. The measurements between the start and stop of the full data collection process are independent checks on the total transportation time. Data obtained indicate that a .01 LogE resolution can be obtained from a zero to 4.0, 10 cm wedge which is more than enough to insure resolution better than one half row of dots.

## Claims

**1.** In a process for producing an image by thermal mass transfer or thermal dye transfer, the steps comprising providing at least two different color thermal transfer donor surfaces in a fixed order, selecting an order of use for more than one color of said two colors wherein said order of use is different from said fixed order, signaling a thermal printhead to transfer a first color and at least a second color in the order of use selected, and forming an image comprising said more than one color on a receptor by heating thermal transfer media in said order of use with said thermal head to transfer image density from said media to said receptor while said receptor is restrained against a support surface to promote registration.

**2.** The process of Claim 1 wherein at least three different color thermal transfer donor surfaces are provided in a fixed order.

**3.** The process of Claim 2 wherein after said image comprising said more than one color has been transferred to said receptor, at least one additional thermal transfer media having an additional transferable color not contained in at least four colors of said fixed order is provided adjacent said receptor with the transferred image thereon, and a thermal printhead is signalled to transfer an image with said additional color from said at least one additional thermal transfer media to said receptor.

**4.** A process for producing an image by thermal transfer, comprising the steps of; (a) providing a thermal print head, thermal transfer media, and thermal receptor, (b) moving said receptor and media relative to said thermal print head, (c) sensing the movement of said receptor or media, and (d) altering the signals to said thermal head to adjust for variations in the speed of said receptor and/or media.

**5.** The process of Claim 4 wherein said sensing determines whether said receptor is moving or is to move relatively forward or backward, and where said receptor is moving or is to move backward, the signals to said thermal head are altered by providing the image signals in a backward ordering so that an image produced would be in register with an image provided during forward movement of the receptor! and forward ordering of the image signals.

**6** The process of Claim 4 where the altering of the signal is a rotation of the image data more than 1 degree and less than 359 degrees.

**7.** The process of Claim 6 wherein the data which is altered is used to signal the thermal printhead more than one time, and at least one of those times in an altered form.

**8.** The process of Claim 4 wherein said altering of signals to said thermal head is to adjust for variations in the speed of said receptor and/or media.

**9.** The process of Claim 4 wherein said altering of signals to said thermal head is a compression or expansion of image data.

**10.** The process of Claim 9 wherein said compression or expansion is done in response to a reading of the size of said receptor.

**11.** The process of Claim 2 wherein the sensing process alters the signal to the printhead to effect color changes in the image.

**12.** The process of Claims 2 or 4 wherein a color image simulating the color of a surface different from said receptor is transferred onto at least background image areas of said receptor.
